# EUROPEAN PATENT SPECIFICATION

(11) **EP 3 498 047 B1**
(45) Date of publication and mention of the grant of the patent: **11.06.2025**
(21) Application number: 17839954.9
(22) Date of filing: 27.04.2017
(51) Int. Cl.: H04W 88/06, H04W 80/02, H04B 7/26, H04W 8/22

(54) **MULTIPLE MAC ENTITIES PER USER EQUIPMENT**
MEHRERE MAC-EINHEITEN PRO BENUTZERVORRICHTUNG
MULTIPLES ENTITÉS MAC PAR ÉQUIPEMENT D'UTILISATEUR

(30) Priority: 12.08.2016 US 201662374623 P
(43) Date of publication of application: 19.06.2019
(73) Proprietor: Apple Inc., Cupertino, CA 95014 (US)
(72) Inventor: PHUYAL, Umesh, Hillsboro, Oregon 97124 (US); BURBIDGE, Richard C., Shrivenham Oxfordshire SN6 8HR (GB); PALAT, Sudeep K., Cheltenham Gloucestershire GL51 0GG (GB); HEO, Youn Hyoung, Seoul 11, 150-705 (KR); SHRESTHA, Bharat, Hillsboro, Oregon 97124 (US)
(74) Representative: Lang, Johannes
(86) International application number: PCT/US2017/029878
(87) International publication number: WO 2018/031085

(56) References cited:
- US-A1- 2005 286 472
- US-A1- 2008 139 212
- US-A1- 2011 085 524
- US-A1- 2016 212 737
- US-B2- 8 908 618
- SAMSUNG: "Multiplexing of vertical services in New RAT", vol. RAN WG2, no. Dubrovnik, Croatia; 20160411 - 20160415, 1 April 2016 (2016-04-01), XP051082021, Retrieved from the Internet <URL:http://www.3gpp.org/ftp/tsg_ran/WG2_RL2/TSGR2_93bis/Docs/> [retrieved on 20160401]
- HUAWEI ET AL: "NR MAC: multiplexing diverse services on a common NR air interface", vol. RAN WG2, no. Nanjing, China; 20160523 - 20160527, 22 May 2016 (2016-05-22), XP051105042, Retrieved from the Internet <URL:http://www.3gpp.org/ftp/Meetings_3GPP_SYNC/RAN2/Docs/> [retrieved on 20160522]
- INTEL CORPORATION: "MAC aspects for NR", vol. RAN WG2, no. Dubrovnik, Croatia; 20160411 - 20160415, 2 April 2016 (2016-04-02), XP051082506, Retrieved from the Internet <URL:http://www.3gpp.org/ftp/tsg_ran/WG2_RL2/TSGR2_93bis/Docs/> [retrieved on 20160402]
- IPWIRELESS INC: "Connectionless approaches to supporting Diverse Data Applications", 3GPP DRAFT; R2-120444, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 30 January 2012 (2012-01-30), XP050565166

## Description

### TECHNICAL FIELD

Embodiments pertain to wireless communications. Some embodiments pertain to Medium Access Control (MAC) entities in a User Equipment (UE). Some embodiments relate to systems and methods for providing multiple MAC entities per UE.
Samsung: "Multiplexing of vertical services in NEW RAT"; 3GPP TSG-RAN WG2 Meeting #93bis; R2-162243 describes RAN2 issues to support multiplexing of traffic for various vertical services and use cases.
Huawei et al.: "NR MAC: multiplexing diverse services on a common NR air interface"; 3GPP TSG-RAN2 Meeting #94; R2-163594 describes efficient service multiplexing of traffic for different services and use cases on the same contiguous block of spectrum.

### BACKGROUND

It may be desirable for a User Equipment (UE) to support multiple different communication types in the Medium Access Control (MAC) layer. As the foregoing illustrates, multiple MAC entities per UE may be desirable.

### SUMMARY

The invention is set out by the appended set of claims.

### BRIEF DESCRIPTION OF THE DRAWINGS

FIG. 1 illustrates an example User Equipment (UE) which supports multiple Medium Access Control (MAC) entities, in accordance with some embodiments.
FIG. 2 is a flow chart of an example method by which a UE supports multiple MAC entities, in accordance with some embodiments.
FIG. 3 is a functional diagram of a wireless network, in accordance with some embodiments.
FIG. 4 illustrates components of a communication device, in accordance with some embodiments.
FIG. 5 illustrates a block diagram of a communication device, in accordance with some embodiments.
FIG. 6 illustrates another block diagram of a communication device, in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

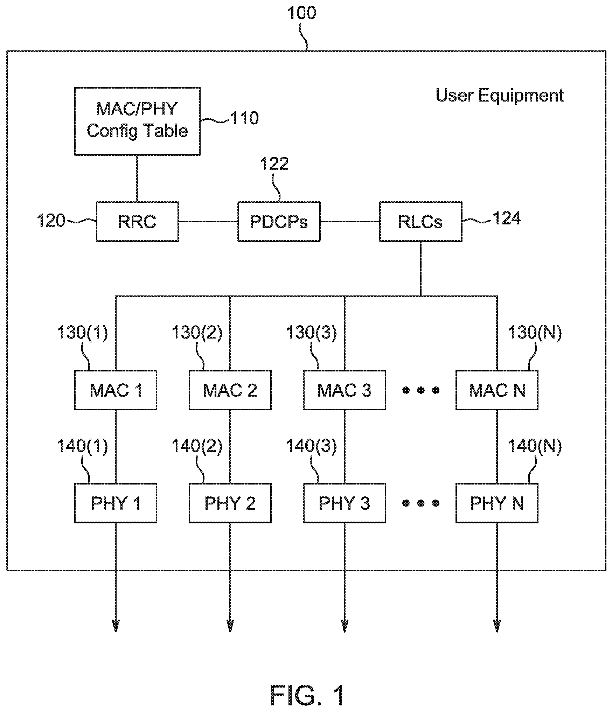

FIG. 1 illustrates an example User Equipment (UE) 100 which supports multiple Medium Access Control (MAC) entities, in accordance with some embodiments. As shown, the UE includes a MAC/PHY (physical layer) configuration ("config") table 110. The MAC/PHY config table 110 is coupled with a Radio Resource Control (RRC) layer 120, which is coupled with Packet Data Convergence Protocols (PDCPs) 122, which is coupled with Radio Link Controls (RLCs) 124. The RLCs 124 are connected to N (where N is a number greater than or equal to 2) MAC entities 130(1)-130(N), numbered 1 through N. Each MAC entity 130(k) (where k is a number between 1 and N) is connected with a corresponding PHY entity 140(k), so there are N PHY entities 140(1)-140(N), numbered 1 through N.

According to some embodiments, the UE 100 configures a first MAC entity 130(1) of the UE 100 to support a first communication type. The first communication type may include enhanced mobile broadband. The UE 100 configures a second MAC entity 130(2) of the UE 100 to support a second communication type. The second communication type may include massive machine type communication or ultra-reliable low latency communications.

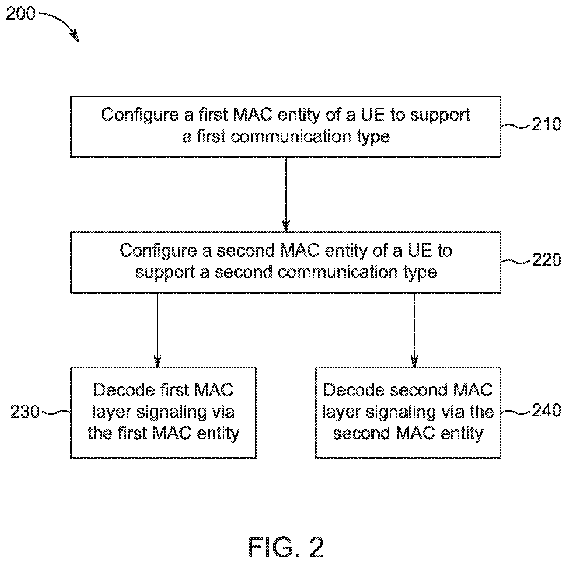

FIG. 2 is a flow chart of an example method 200 by which the UE 100 supports multiple MAC entities 130(1)-130(N), in accordance with some embodiments. While the method 200 is described as being implemented at the UE 100, the operations of the method 200 may also be implemented at other UEs.

At operation 210, the UE 100 configures the first MAC entity 130(1) of the UE 100 to support the first communication type. At operation 220, the UE 100 configures the second MAC entity 130(2) of the UE 100 to support the second communication type.

The operations 230 and 240 may be implemented contemporaneously. Alternatively, one of the operations 230 and 240 may be implemented before the other. At operation 230, the UE 100 decodes first MAC layer signaling via the first MAC entity 130(1). At operation 240, the UE 100 decodes second MAC layer signaling via the second MAC entity 130(2).

In some cases, the UE 100 configures additional MAC entities to support respective communication types to a maximum supported count of MAC entities. The UE 100 provides the maximum supported count of MAC entities to an evolved Node B (eNodeB) during connection to the eNodeB. It should be noted that, in NR (5G), the eNodeB (eNB) may be referred to as a gNodeB (gNB). In this document, eNodeB (eNB) and gNodeB (gNB) may be used interchangeably.

It may be desirable to target a single technical framework addressing multiple usage scenarios and deployment scenarios, including enhanced mobile broadband, massive Machine Type Communications (MTC), and Ultra-Reliable Low Latency Communications (URLLC). It may be desirable to develop a radio protocol structure and architecture to fulfill the above objectives. Some examples of the solution may include radio interface protocol architecture and procedures, and radio access network architecture, interface protocols, and procedures.

Some aspects of the subject technology relate to the radio interference protocol architectures and procedures. Some aspects are related to enhanced MAC layer functionalities to support different usage scenarios (also known as verticals) - namely enhanced mobile broadband (eMBB), massive MTC (mMTC), and URLLC. Some aspects are related to MAC functions, MAC configurations, and PHY configurations.

The MAC layer may provide the following functions in Long Term Evolution (LTE): mapping between logical channels and transport channels; multiplexing/ demultiplexing of MAC Service Data Units (SDUs) from one or different logical channels onto/ from transport blocks (TBs) to be delivered to/ from the physical layer on transport channels; scheduling information reporting; error correction through Hybrid Automatic Repeat Request (HARQ); priority handling between UEs by using dynamic scheduling; priority handling between logical channels of one MAC entity (logical channel prioritization); and transport format selection.

Some examples of MAC parameters in LTE include maximum number of HARQ retransmissions, Buffer Status Report (BSR) timers, Discontinuous Reception (DRX) and enhanced DRX (eDRX) configurations, time alignment timers, Power Headroom Report (PHR) configurations, Scheduling Request (SR) prohibit timer, DC-related parameters (e.g., SCell deactivation timer), extended BSR, extended PHR, SCell TAG configurations, and the like. As some of the above parameters may be highly related with the QoS requirements of different verticals, in 5G, the New Radio (NR) MAC design may support various MAC configurations to support different verticals. For example, the HARQ configuration of eMBB may be different from the HARQ configuration of URLLC due to the different data rate, latency, and reliability requirements. However, all Data Radio Bearers (DRBs) within the URLLC vertical are likely to have the same HARQ configuration. In some implementations of the subject technology, one MAC configuration applies to all DRBs of a particular vertical at a time.

In terms of PHY configurations, a NR network may support more than one vertical at the service level. In some aspects, to establish forward compatibility, a UE supports more than one vertical simultaneously (at the service level). As an example, even if at some early releases, NR is designed to support one vertical at a time from the UE perspective, some design decisions might not restrict a NR UE in future releases from supporting both eMBB and URLLC simultaneously at the service level.

In a majority of LTE features, the UE supports a Transmission Time Interval (TTI) length of 1 ms with subcarrier spacing of 15 KHz. In some cases, at least two TTI values may coexist in the same NR network. In NR, the TTI value may be reduced to a smaller value by changing sub-carrier spacing so that the requirement of low latency could be met. A UE can be configured to support variable TTI lengths (e.g., 2 ms, 1 ms, 0.5 ms, 0.25 ms, etc.) with different subcarrier spacing (e.g., 7.5 KHz, 15 KHz, 30 KHz, 60 KHz, etc.) while supporting the same number of Orthogonal Frequency Division Multiplexing (OFDM) symbols in each TTI. Alternatively, the subcarrier spacing may be kept unchanged while changing the number of symbols per TTI to realize a different TTI duration. In some cases, both approaches above may be applied in combination. Each vertical may be configured to support the same or different TTI configurations. For example, URLLC may support 0.25 ms TTI and eMBB may support 1 ms TTI. However, in some aspects, the subject technology may enable eMBB traffic to use less than 1 ms TTI. In some cases, a 5G UE may support multiple PHY configurations, where a PHY configuration may include one or more values corresponding to (but not limited to) subcarrier spacing, numerology, TTI intervals, number of OFDM symbols per subframe, and the like. In addition, some verticals may be supported using multiple PHY configurations.

Moreover, multiple TTI durations may be supported simultaneously from a UE perspective. This may impact whether a different QoS needs to be implemented with different bearers on different TTI sizes (e.g., a short TTI for URLLC). If a different TTI is introduced per different QoS (vertical), rules need to be specified by MAC on how different TTIs can coexist or be multiplexed. For example, different TTI sizes may exist on a per UE basis, on a per DRB basis, dynamically switched for a single UE (or DRB), or supported in parallel by the physical layer.

According to some examples of the subject technology, the UE and the network support multiple MAC or PHY configurations or combination(s) of MAC-PHY configurations for supporting different verticals. Each UE can support multiple MAC entities. The number of MAC entities it can support is based on the MAC, PHY, or MAC-PHY configurations that it supports. The MAC entities are instantiated when vastly different QoS is to be provided. The UE can provide the information about the maximum number of MAC entities it can support using the UE capability, based on UE category or upon network request. The number of MAC entities per UE that the network can support for a UE may be predefined or configurable.

The current LTE specification only supports one MAC entity per UE (per cell group). Based on the broad range of QoS requirements and traffic characteristics of the 5G, a single MAC entity may not be sufficient or efficient. Supporting multiple MAC entities based on supported MAC, PHY, and/or MAC-PHY configurations may be useful, as described herein.

In this document, certain examples and embodiments are described using LTE terminology. However, the subject technology is not limited to LTE and may be used in conjunction with other technology, for example NR, 5G, LTE-advanced and LTE-advanced pro.

Some embodiments relate to MAC-PHY configurations for supporting different verticals. Combinations of some or all of the MAC and PHY parameters may be used to define suitable MAC-PHY configurations targeted to certain target verticals or UE types. The configurations may be predefined in the specification and identified by or mapped to a MAC-PHY configuration index. Certain sets of MAC-PHY configurations may be more suitable to one vertical (e.g., URLLC) compared to another vertical (e.g., eMBB). A MAC-PHY configuration suitable for URLLC may have a shorter TTI duration and a lower number of HARQ retransmission limit. On the other hand, a MAC-PHY configuration suitable for eMBB may have a longer TTI duration and a higher number of HARQ retransmission limit.

As some of the above parameters may be highly related with the QoS requirements of different verticals, some embodiments may support various MAC-PHY configurations to support different verticals.

Some embodiments relate to a number of MAC entities. In LTE, a single MAC entity per UE per cell group is supported by the UE to multiplex data for different Radio Bearers (RBs). In some embodiments, if there is one MAC entity per cell group per UE, data from different verticals can be multiplexed in a single MAC Protocol Data Unit (PDU).

In 5G, different verticals may have vast differences in their QoS characteristics. In such cases, if eMBB is to be multiplexed with URLLC data for example, then the multiplexed PDU may be treated with higher priority in terms of latency and reliability as if the whole PDU is URLLC.

In another approach, the UE can support multiple MAC entities to handle vastly different QoS requirements. The UE may simultaneously support different MAC configurations.

Additionally, different PHY configurations are supported by some implementations of 5G to handle different QoS parameters. For example, TTI may be different in different PHY configurations to allow for URLLC operation on short TTIs and eMBB operation on long TTIs. Therefore, a separate MAC entity handling each PHY configuration is supported by the UE. This keeps the MAC design simple and handles different verticals efficiently.

Various MAC-PHY configurations may be defined to support various use cases. A separate MAC entity may be used to handle separate MAC-PHY configurations. Several options for the number of MAC entities per UE in 5G are provided below.

In one option, the UE supports multiple MAC entities based on the number of MAC configurations supported by the UE. In one example, the number of MAC configurations may depend on the verticals or use cases being supported.

In one option, the UE supports multiple MAC entities based on the number of PHY entities supported by the UE. In one example, the number of PHY configurations supported depends on the services supported, resources available, deployment considerations, and the like.

In one option, the UE supports multiple MAC entities based on the number of MAC-PHY configurations supported by the UE. In one example, the number of MAC-PHY configurations supported depends on the services supported, resources available, deployment considerations, and the like.

In one option, the UE supports multiple MAC entities based on the number of supported MAC, PHY, or MAC-PHY configurations. In one option, the UE supports multiple MAC entities based on the maximum number of MAC entities predefined based on the UE category or class. In one option, the UE supports a single MAC entity per cell group per UE.

Multiple MAC entities may be initiated when vastly different QoS parameters are required to be supported. If the UE supports multiple MAC entities, it may be up to the evolved Node B (eNB) to decide based on its QoS characteristics to which MAC, PHY, or MAC-PHY configuration a certain RB should be mapped. In one example, the eNB maps RB(s) with similar QoS requirements to the corresponding MAC entity which has the appropriate MAC, PHY, or MAC-PHY configuration most likely to fulfill the QoS requirements efficiently. This means that, in some examples, a UE can support multiple RBs per MAC entity at a time. It should be noted that, in NR (5G), the eNodeB (eNB) may be referred to as a gNodeB (gNB). In this document, eNodeB (eNB) and gNodeB (gNB) may be used interchangeably.

Depending on the use case scenario, in one example, multiple MAC entities or configurations may be supported for some or all PHY configurations. For example, the same PHY configuration may be used (e.g., same numerology, TTI) for both eMBB and URLLC traffic. However, the MAC configurations may be different (e.g., HARQ retransmissions may be different). In another example, to simplify the design, one-to-one mapping of MAC entity/ configuration for each configuration may be defined.

In some embodiments, the UE capability is related to the maximum number of MAC entities it supports. If the UEs are capable of supporting one or more MAC entities, it may not be ideal to have all UEs support the same number of MAC entities. That means different UEs may be able to support a different maximum number of MAC entities. Therefore, it may be beneficial for the network to know how many MAC entities may be supported by the UE. The following options are possible for the network to know this information.

In one option, the UE indicates the maximum number of MAC entities that it can support using UE capability signaling. In one example, this could be communicated at the time of network attach when the network inquires about the UE capabilities.

In one option, the network requests this information at other times using some dedicated or broadcast signals. The UE may respond to this request by providing the maximum number of MAC entities that it can support.

In one option, the maximum number of MAC entities supported by the UE may be predefined based on a class or a category of the UE. The network implicitly knows about the maximum number of MAC entities that the UE can support based on the class or the category information.

In one embodiment, the maximum number of MAC entities supported by the network for each UE is set. The maximum number of MAC entities supported by the network for each UE may be a configurable parameter. Alternatively, it may be based on the UE category or a fixed value predefined in the specification.

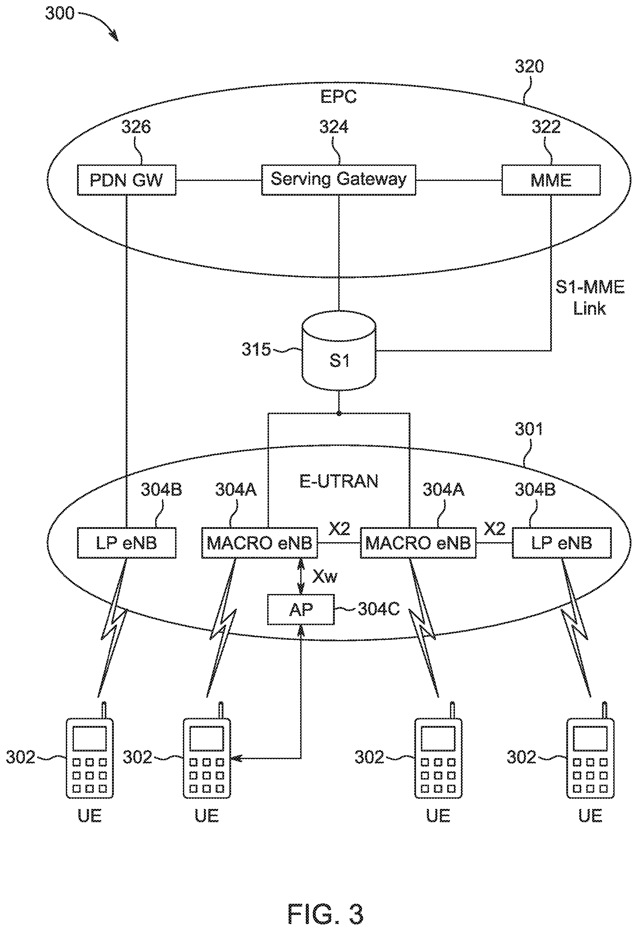

FIG. 3 shows an example of a portion of an end-to-end network architecture of a Long Term Evolution (LTE) network with various components of the network in accordance with some embodiments. As used herein, an LTE network refers to both LTE and LTE Advanced (LTE-A) networks as well as other versions of LTE networks to be developed. The network 300 may comprise a radio access network (RAN) (e.g., as depicted, the E-UTRAN or evolved universal terrestrial radio access network) 301 and core network 320 (e.g., shown as an evolved packet core (EPC)) coupled together through an S1 interface 315. For convenience and brevity, only a portion of the core network 320, as well as the RAN 301, is shown in the example.

The subject technology may be implemented in NR or LTE, as described below. In NR, a 5G Node B (gNB) corresponds to a LTE eNB. In NR, the Xn interface corresponds to the X2 interface of LTE. In NR, TRP corresponds to LPN of LTE. In conjunction with FIGS. 3-9, various implementations are discussed in conjunction with LTE. However, the subject technology may also be implemented in a NR environment or any other cellular environment.

The core network 320 may include a mobility management entity (MME) 322, serving gateway (serving GW) 324, and packet data network gateway (PDN GW) 326. The RAN 301 may include evolved Node Bs (eNodeBs or eNBs) 304 (which may operate as base stations) for communicating with user equipment (UE) 302. The eNBs 304 may include macro eNBs 304a and low power (LP) eNBs 304b. The UEs 302 may correspond to any of the UEs 120A, 125A, and 130B of FIGS. 1A-1B.

The MME 322 may be similar in function to the control plane of legacy Serving GPRS Support Nodes (SGSN). The MME 322 may manage mobility aspects in access such as gateway selection and tracking area list management. The serving GW 324 may terminate the interface toward the RAN 301, and route data packets between the RAN 301 and the core network 320. In addition, the serving GW 324 may be a local mobility anchor point for inter-eNB handovers and also may provide an anchor for inter-3GPP mobility. Other responsibilities may include lawful intercept, charging, and some policy enforcement. The serving GW 324 and the MME 322 may be implemented in one physical node or separate physical nodes.

The PDN GW 326 may terminate a SGi interface toward the packet data network (PDN). The PDN GW 326 may route data packets between the EPC 320 and the external PDN, and may perform policy enforcement and charging data collection. The PDN GW 326 may also provide an anchor point for mobility devices with non-LTE access. The external PDN can be any kind of IP network, as well as an IP Multimedia Subsystem (IMS) domain. The PDN GW 326 and the serving GW 324 may be implemented in a single physical node or separate physical nodes.

The eNBs 304 (macro and micro) may terminate the air interface protocol and may be the first point of contact for a UE 302. In some embodiments, an eNB 304 may fulfill various logical functions for the RAN 301 including, but not limited to, RNC (radio network controller functions) such as radio bearer management, uplink and downlink dynamic radio resource management and data packet scheduling, and mobility management. In accordance with embodiments, UEs 302 may be configured to communicate orthogonal frequency division multiplexed (OFDM) communication signals with an eNB 304 over a multicarrier communication channel in accordance with an OFDMA communication technique. The OFDM signals may comprise a plurality of orthogonal subcarriers.

The S1 interface 315 may be the interface that separates the RAN 301 and the EPC 320. It may be split into two parts: the S1-U, which may carry traffic data between the eNBs 304 and the serving GW 324, and the S1-MME, which may be a signaling interface between the eNBs 304 and the MME 322. The X2 interface may be the interface between eNBs 304. The X2 interface may comprise two parts, the X2-C and X2-U. The X2-C may be the control plane interface between the eNBs 304, while the X2-U may be the user plane interface between the eNBs 304.

With cellular networks, LP cells 304b may be typically used to extend coverage to indoor areas where outdoor signals do not reach well, or to add network capacity in areas with dense usage. In particular, it may be desirable to enhance the coverage of a wireless communication system using cells of different sizes, macrocells, microcells, picocells, and femtocells, to boost system performance. The cells of different sizes may operate on the same frequency band, or may operate on different frequency bands with each cell operating in a different frequency band or only cells of different sizes operating on different frequency bands. As used herein, the term LP eNB refers to any suitable relatively LP eNB for implementing a smaller cell (smaller than a macro cell) such as a femtocell, a picocell, or a microcell. Femtocell eNBs may be typically provided by a mobile network operator to its residential or enterprise customers. A femtocell may be typically the size of a residential gateway or smaller and generally connect to a broadband line. The femtocell may connect to the mobile operator's mobile network and provide extra coverage in a range of typically 30 to 30 meters. Thus, a LP eNB 304b might be a femtocell eNB since it is coupled through the PDN GW 326. Similarly, a picocell may be a wireless communication system typically covering a small area, such as in-building (offices, shopping malls, train stations, etc.), or more recently in-aircraft. A picocell eNB may generally connect through the X2 link to another eNB such as a macro eNB through its base station controller (BSC) functionality. Thus, LP eNB may be implemented with a picocell eNB since it may be coupled to a macro eNB 304a via an X2 interface. Picocell eNBs or other LP eNBs LP eNB 304b may incorporate some or all functionality of a macro eNB LP eNB 304a. In some cases, this may be referred to as an access point base station or enterprise femtocell.

In some embodiments, the UE 302 may communicate with an access point (AP) 304c. The AP 304c may use only the unlicensed spectrum (e.g., WiFi bands) to communicate with the UE 302. The AP 304c may communicate with the macro eNB 304A (or LP eNB 304B) through an Xw interface. In some embodiments, the AP 304c may communicate with the UE 302 independent of communication between the UE 302 and the macro eNB 304A. In other embodiments, the AP 304c may be controlled by the macro eNB 304A and use LWA, as described in more detail below.

Communication over an LTE network may be split up into 5ms frames, each of which may contain ten 1ms subframes. Each subframe of the frame, in turn, may contain two slots of 0.5ms. Each subframe may be used for uplink (UL) communications from the UEto the eNB or downlink (DL) communications from the eNB to the UE. In one embodiment, the eNB may allocate a greater number of DL communications than UL communications in a particular frame. The eNB may schedule transmissions over a variety of frequency bands (f₁ and f₂). The allocation of resources in subframes used in one frequency band and may differ from those in another frequency band. Each slot of the subframe may contain 4-7 OFDM symbols, depending on the system used. In one embodiment, the subframe may contain 12 subcarriers. A downlink resource grid may be used for downlink transmissions from an eNB to a UE, while an uplink resource grid may be used for uplink transmissions from a UE to an eNB or from a UE to another UE. The resource grid may be a time-frequency grid, which is the physical resource in the downlink in each slot. The smallest time-frequency unit in a resource grid may be denoted as a resource element (RE). Each column and each row of the resource grid may correspond to one OFDM symbol and one OFDM subcarrier, respectively. The resource grid may contain resource blocks (RBs) that describe the mapping of physical channels to resource elements and physical RBs (PRBs). A PRB may be the smallest unit of resources that can be allocated to a UE. A resource block may be 180 kHz wide in frequency and 1 slot long in time. In frequency, resource blocks may be either 12 x 15 kHz subcarriers or 24 x 5.5 kHz subcarriers wide. For most channels and signals, 12 subcarriers may be used per resource block, dependent on the system bandwidth. In Frequency Division Duplexed (FDD) mode, both the uplink and downlink frames may be 5ms and frequency (full-duplex) or time (half-duplex) separated. In Time Division Duplexed (TDD), the uplink and downlink subframes may be transmitted on the same frequency and are multiplexed in the time domain. The duration of the resource grid 400 in the time domain corresponds to one subframe or two resource blocks. Each resource grid may comprise 12 (subcarriers) *14 (symbols) =168 resource elements.

Each OFDM symbol may contain a cyclic prefix (CP) which may be used to effectively eliminate Inter Symbol Interference (ISI), and a Fast Fourier Transform (FFT) period. The duration of the CP may be determined by the highest anticipated degree of delay spread. Although distortion from the preceding OFDM symbol may exist within the CP, with a CP of sufficient duration, preceding OFDM symbols do not enter the FFT period. Once the FFT period signal is received and digitized, the receiver may ignore the signal in the CP.

There may be several different physical downlink channels that are conveyed using such resource blocks, including the physical downlink control channel (PDCCH) and the physical downlink shared channel (PDSCH). Each subframe may be partitioned into the PDCCH and the PDSCH. The PDCCH may normally occupy the first two symbols of each subframe and carries, among other things, information about the transport format and resource allocations related to the PDSCH channel, as well as H-ARQ information related to the uplink shared channel. The PDSCH may carry user data and higher layer signaling to a UE and occupy the remainder of the subframe. Typically, downlink scheduling (assigning control and shared channel resource blocks to UEs within a cell) may be performed at the eNB based on channel quality information provided from the UEs to the eNB, and then the downlink resource assignment information may be sent to each UE on the PDCCH used for (assigned to) the UE. The PDCCH may contain downlink control information (DCI) in one of a number of formats that indicate to the UE how to find and decode data, transmitted on PDSCH in the same subframe, from the resource grid. The DCI format may provide details such as number of resource blocks, resource allocation type, modulation scheme, transport block, redundancy version, coding rate etc. Each DCI format may have a cyclic redundancy code (CRC) and be scrambled with a Radio Network Temporary Identifier (RNTI) that identifies the target UE for which the PDSCH is intended. Use of the UE-specific RNTI may limit decoding of the DCI format (and hence the corresponding PDSCH) to only the intended UE.

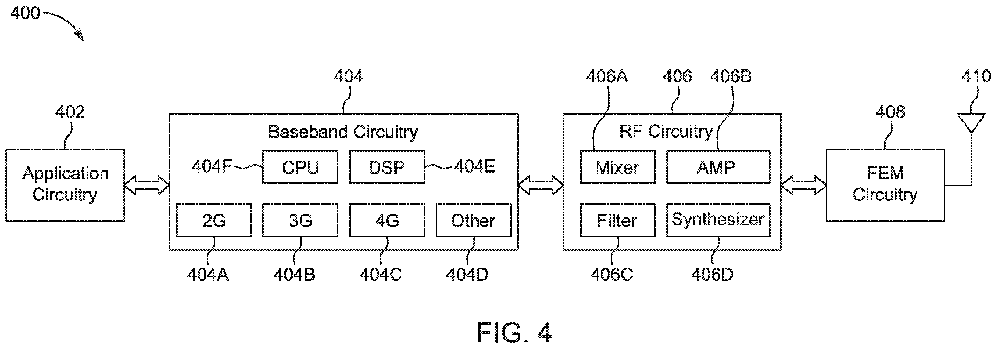

Embodiments described herein may be implemented into a system using any suitably configured hardware and/or software. FIG. 4 illustrates components of a UE in accordance with some embodiments. At least some of the components shown may be used in an eNB or MME, for example, such as the UE 302 or eNB 304 shown in FIG. 3 or the nUE 60, wUE 120 or E-UTRAN BS 130 of FIG. 1. The UE 400 and other components may be configured to use the synchronization signals as described herein. The UE 400 may be one of the UEs 402 shown in FIG. 1 and may be a stationary, non-mobile device or may be a mobile device. In some embodiments, the UE 400 may include application circuitry 402, baseband circuitry 404, Radio Frequency (RF) circuitry 406, front-end module (FEM) circuitry 408 and one or more antennas 410, coupled together at least as shown. At least some of the baseband circuitry 404, RF circuitry 406, and FEM circuitry 408 may form a transceiver. In some embodiments, other network elements, such as the eNB may contain some or all of the components shown in FIG. 4. Other of the network elements, such as the MME, may contain an interface, such as the S1 interface, to communicate with the eNB over a wired connection regarding the UE.

The application or processing circuitry 402 may include one or more application processors. For example, the application circuitry 402 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 404 may include circuitry such as, but not limited to, one or more single-core or multi-core processors. The baseband circuitry 404 may include one or more baseband processors and/or control logic to process baseband signals received from a receive signal path of the RF circuitry 406 and to generate baseband signals for a transmit signal path of the RF circuitry 406. Baseband processing circuity 404. may interface with the application circuitry 402 for generation and processing of the baseband signals and for controlling operations of the RF circuitry 406. For example, in some embodiments, the baseband circuitry 404 may include a second generation (2G) baseband processor 404a, third generation (3G) baseband processor 404b, fourth generation (4G) baseband processor 404c, and/or other baseband processor(s) 404d for other existing generations, generations in development or to be developed in the future (e.g., fifth generation (5G), 4G, etc.). The baseband circuitry 404 (e.g., one or more of baseband processors 404a-d) may handle various radio control functions that enable communication with one or more radio networks via the RF circuitry 406. The radio control functions may include, but are not limited to, signal modulation/demodulation, encoding/decoding, radio frequency shifting, etc. In some embodiments, modulation/demodulation circuitry of the baseband circuitry 404 may include FFT, precoding, and/or constellation mapping/demapping functionality. In some embodiments, encoding/decoding circuitry of the baseband circuitry 404 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 404 may include elements of a protocol stack such as, for example, elements of an evolved universal terrestrial radio access network (E-UTRAN) protocol including, for example, physical (PHY), media access control (MAC), radio link control (RLC), packet data convergence protocol (PDCP), and/or radio resource control (RRC) elements. A central processing unit (CPU) 404e of the baseband circuitry 404 may be configured to run elements of the protocol stack for signaling of the PHY, MAC, RLC, PDCP and/or RRC layers. In some embodiments, the baseband circuitry may include one or more audio digital signal processor(s) (DSP) 404f. The audio DSP(s) 404f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 404 and the application circuitry 402 may be implemented together such as, for example, on a system on a chip (SOC).

In some embodiments, the baseband circuitry 404 may provide for communication compatible with one or more radio technologies. For example, in some embodiments, the baseband circuitry 404 may support communication with an evolved universal terrestrial radio access network (EUTRAN) and/or other wireless metropolitan area networks (WMAN), a wireless local area network (WLAN), a wireless personal area network- (WPAN). Embodiments in which the baseband circuitry 404 is configured to support radio communications of more than one wireless protocol may be referred to as multimode baseband circuitry. In some embodiments, the device can be configured to operate in accordance with communication standards or other protocols or standards, including Institute of Electrical and Electronic Engineers (IEEE) 302.16 wireless technology (WiMax), IEEE 302.11 wireless technology (WiFi) including IEEE 302.11 ad, which operates in the 40 GHz millimeter wave spectrum, various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 3G, etc. technologies either already developed or to be developed.

RF circuitry 406 may enable communication with wireless networks using modulated electromagnetic radiation through a non-solid medium. In various embodiments, the RF circuitry 406 may include switches, filters, amplifiers, etc. to facilitate the communication with the wireless network. RF circuitry 406 may include a receive signal path which may include circuitry to down-convert RF signals received from the FEM circuitry 408 and provide baseband signals to the baseband circuitry 404. RF circuitry 406 may also include a transmit signal path which may include circuitry to up-convert baseband signals provided by the baseband circuitry 404 and provide RF output signals to the FEM circuitry 408 for transmission.

In some embodiments, the RF circuitry 406 may include a receive signal path and a transmit signal path. The receive signal path of the RF circuitry 406 may include mixer circuitry 406a, amplifier circuitry 406b and filter circuitry 406c. The transmit signal path of the RF circuitry 406 may include filter circuitry 406c and mixer circuitry 406a. RF circuitry 406 may also include synthesizer circuitry 406d for synthesizing a frequency for use by the mixer circuitry 406a of the receive signal path and the transmit signal path. In some embodiments, the mixer circuitry 406a of the receive signal path may be configured to down-convert RF signals received from the FEM circuitry 408 based on the synthesized frequency provided by synthesizer circuitry 406d. The amplifier circuitry 406b may be configured to amplify the down-converted signals and the filter circuitry 406c may be a low-pass filter (LPF) or band-pass filter (BPF) configured to remove unwanted signals from the down-converted signals to generate output baseband signals. Output baseband signals may be provided to the baseband circuitry 404 for further processing. In some embodiments, the output baseband signals may be zero-frequency baseband signals, although this is not a requirement. In some embodiments, mixer circuitry 406a of the receive signal path may comprise passive mixers, although the scope of the embodiments is not limited in this respect.

In some embodiments, the mixer circuitry 406a of the transmit signal path may be configured to up-convert input baseband signals based on the synthesized frequency provided by the synthesizer circuitry 406d to generate RF output signals for the FEM circuitry 408. The baseband signals may be provided by the baseband circuitry 404 and may be filtered by filter circuitry 406c. The filter circuitry 406c may include a low-pass filter (LPF), although the scope of the embodiments is not limited in this respect.

In some embodiments, the mixer circuitry 406a of the receive signal path and the mixer circuitry 406a of the transmit signal path may include two or more mixers and may be arranged for quadrature downconversion and/or upconversion respectively. In some embodiments, the mixer circuitry 406a of the receive signal path and the mixer circuitry 406a of the transmit signal path may include two or more mixers and may be arranged for image rejection (e.g., Hartley image rejection). In some embodiments, the mixer circuitry 406a of the receive signal path and the mixer circuitry 406a may be arranged for direct downconversion and/or direct upconversion, respectively. In some embodiments, the mixer circuitry 406a of the receive signal path and the mixer circuitry 406a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 406 may include analog-to-digital converter (ADC) and digital-to-analog converter (DAC) circuitry and the baseband circuitry 404 may include a digital baseband interface to communicate with the RF circuitry 406.

In some dual-mode embodiments, a separate radio IC circuitry may be provided for processing signals for each spectrum, although the scope of the embodiments is not limited in this respect.

In some embodiments, the synthesizer circuitry 406d may be a fractional-N synthesizer or a fractional N/N+1 synthesizer, although the scope of the embodiments is not limited in this respect as other types of frequency synthesizers may be suitable. For example, synthesizer circuitry 406d may be a delta-sigma synthesizer, a frequency multiplier, or a synthesizer comprising a phase-locked loop with a frequency divider.

The synthesizer circuitry 406d may be configured to synthesize an output frequency for use by the mixer circuitry 406a of the RF circuitry 406 based on a frequency input and a divider control input. In some embodiments, the synthesizer circuitry 406d may be a fractional N/N+1 synthesizer.

In some embodiments, frequency input may be provided by a voltage controlled oscillator (VCO), although that is not a requirement. Divider control input may be provided by either the baseband circuitry 404 or the applications processor 402 depending on the desired output frequency. In some embodiments, a divider control input (e.g., N) may be determined from a look-up table based on a channel indicated by the applications processor 402.

Synthesizer circuitry 406d of the RF circuitry 406 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 406d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 406 may include an IQ/polar converter.

FEM circuitry 408 may include a receive signal path which may include circuitry configured to operate on RF signals received from one or more antennas 410, amplify the received signals and provide the amplified versions of the received signals to the RF circuitry 406 for further processing. FEM circuitry 408 may also include a transmit signal path which may include circuitry configured to amplify signals for transmission provided by the RF circuitry 406 for transmission by one or more of the one or more antennas 410.

In some embodiments, the FEM circuitry 408 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 406). The transmit signal path of the FEM circuitry 408 may include a power amplifier (PA) to amplify input RF signals (e.g., provided by RF circuitry 406), and one or more filters to generate RF signals for subsequent transmission (e.g., by one or more of the one or more antennas 410.

In some embodiments, the UE 400 may include additional elements such as, for example, memory/storage, display, camera, sensor, and/or input/output (I/O) interface as described in more detail below. In some embodiments, the UE 400 described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or other device that may receive and/or transmit information wirelessly. In some embodiments, the UE 400 may include one or more user interfaces designed to enable user interaction with the system and/or peripheral component interfaces designed to enable peripheral component interaction with the system. For example, the UE 400 may include one or more of a keyboard, a keypad, a touchpad, a display, a sensor, a non-volatile memory port, a universal serial bus (USB) port, an audio jack, a power supply interface, one or more antennas, a graphics processor, an application processor, a speaker, a microphone, and other I/O components. The display may be an LCD or LED screen including a touch screen. The sensor may include a gyro sensor, an accelerometer, a proximity sensor, an ambient light sensor, and a positioning unit. The positioning unit may communicate with components of a positioning network, e.g., a global positioning system (GPS) satellite.

The antennas 410 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 410 may be effectively separated to take advantage of spatial diversity and the different channel characteristics that may result.

Although the UE 400 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

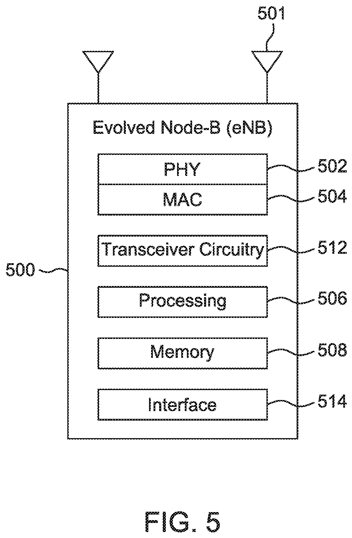

FIG. 5 is a block diagram of a communication device in accordance with some embodiments. The device may be a UE or eNB, for example, such as the UE 302 or eNB 304 shown in FIG. 3 or the mUE 60, wUE 120, or E-UTRAN BS 130 of FIG. 1 that may be configured to track the UE as described herein. The physical layer circuitry 502 may perform various encoding and decoding functions that may include formation of baseband signals for transmission and decoding of received signals. The communication device 500 may also include medium access control layer (MAC) circuitry 504 for controlling access to the wireless medium. The communication device 500 may also include processing circuitry 506, such as one or more single-core or multi-core processors, and memory 508 arranged to perform the operations described herein. The physical layer circuitry 502, MAC circuitry 504 and processing circuitry 506 may handle various radio control functions that enable communication with one or more radio networks compatible with one or more radio technologies. The radio control functions may include signal modulation, encoding, decoding, radio frequency shifting, etc. For example, similar to the device shown in FIG. 2, in some embodiments, communication may be enabled with one or more of a WMAN, a WLAN, and a WPAN. In some embodiments, the communication device 500 can be configured to operate in accordance with 3GPP standards or other protocols or standards, including WiMax, WiFi, WiGig, GSM, EDGE, GERAN, UMTS, UTRAN, or other 3G, 3G, 4G, 3G, etc. technologies either already developed or to be developed. The communication device 500 may include transceiver circuitry 512 to enable communication with other external devices wirelessly and interfaces 514 to enable wired communication with other external devices. As another example, the transceiver circuitry 512 may perform various transmission and reception functions such as conversion of signals between a baseband range and a Radio Frequency (RF) range.

The antennas 501 may comprise one or more directional or omnidirectional antennas, including, for example, dipole antennas, monopole antennas, patch antennas, loop antennas, microstrip antennas or other types of antennas suitable for transmission of RF signals. In some MIMO embodiments, the antennas 501 may be effectively separated to take advantage of spatial diversity and the different channel characteristics that may result.

Although the communication device 500 is illustrated as having several separate functional elements, one or more of the functional elements may be combined and may be implemented by combinations of software-configured elements, such as processing elements including DSPs, and/or other hardware elements. For example, some elements may comprise one or more microprocessors, DSPs, FPGAs, ASICs, RFICs and combinations of various hardware and logic circuitry for performing at least the functions described herein. In some embodiments, the functional elements may refer to one or more processes operating on one or more processing elements. Embodiments may be implemented in one or a combination of hardware, firmware and software. Embodiments may also be implemented as instructions stored on a computer-readable storage device, which may be read and executed by at least one processor to perform the operations described herein.

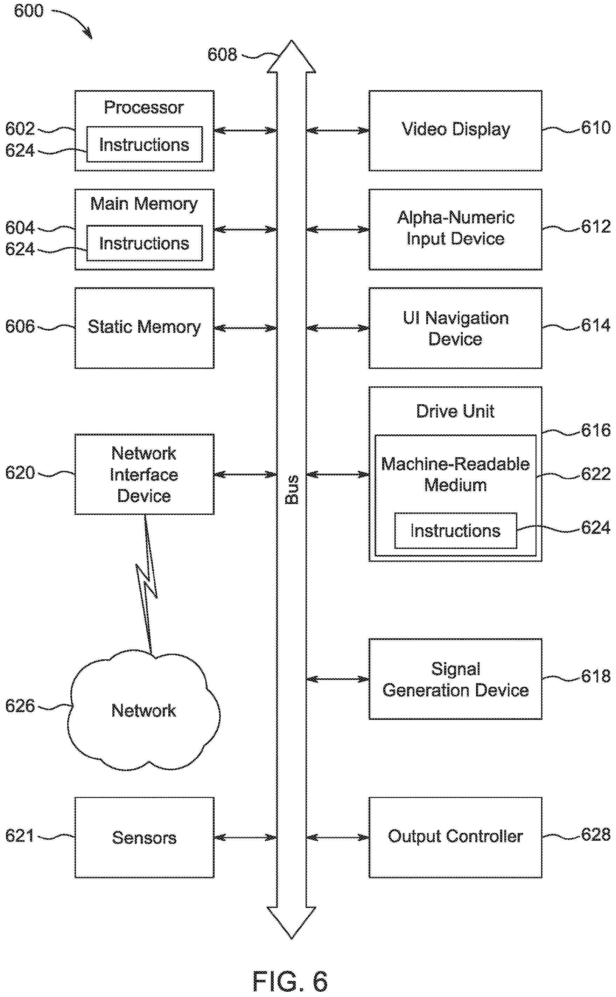

FIG. 6 illustrates another block diagram of a communication device 600 in accordance with some embodiments. The communication device 600 may correspond to the nUE 60 or the wUE 120 of FIG. 1. In alternative embodiments, the communication device 600 may operate as a standalone device or may be connected (e.g., networked) to other communication devices. In a networked deployment, the communication device 600 may operate in the capacity of a server communication device, a client communication device, or both in server-client network environments. In an example, the communication device 600 may act as a peer communication device in peer-to-peer (P2P) (or other distributed) network environment. The communication device 600 may be a UE, eNB, PC, a tablet PC, a STB, a PDA, a mobile telephone, a smart phone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Communication device (e.g., computer system) 600 may include a hardware processor 602 (e.g., a central processing unit (CPU), a graphics processing unit (GPU), a hardware processor core, or any combination thereof), a main memory 604 and a static memory 606, some or all of which may communicate with each other via an interlink (e.g., bus) 608. The communication device 600 may further include a display unit 610, an alphanumeric input device 612 (e.g., a keyboard), and a user interface (UI) navigation device 614 (e.g., a mouse). In an example, the display unit 610, input device 612 and UI navigation device 614 may be a touch screen display. The communication device 600 may additionally include a storage device (e.g., drive unit) 616, a signal generation device 618 (e.g., a speaker), a network interface device 620, and one or more sensors 621, such as a global positioning system (GPS) sensor, compass, accelerometer, or other sensor. The communication device 600 may include an output controller 628, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 616 may include a communication device readable medium 622 on which is stored one or more sets of data structures or instructions 624 (e.g., software) embodying or utilized by any one or more of the techniques or functions described herein. The instructions 624 may also reside, completely or at least partially, within the main memory 604, within static memory 606, or within the hardware processor 602 during execution thereof by the communication device 600. In an example, one or any combination of the hardware processor 602, the main memory 604, the static memory 606, or the storage device 616 may constitute communication device readable media.

While the communication device readable medium 622 is illustrated as a single medium, the term "communication device readable medium" may include a single medium or multiple media (e.g., a centralized or distributed database, and/or associated caches and servers) configured to store the one or more instructions 624.

The term "communication device readable medium" may include any medium that is capable of storing, encoding, or carrying instructions for execution by the communication device 600 and that cause the communication device 600 to perform any one or more of the techniques of the present disclosure, or that is capable of storing, encoding or carrying data structures used by or associated with such instructions. Non-limiting communication device readable medium examples may include solid-state memories, and optical and magnetic media. Specific examples of communication device readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device readable media may include non-transitory communication device readable media. In some examples, communication device readable media may include communication device readable media that is not a transitory propagating signal.

The instructions 624 may further be transmitted or received over a communications network 626 using a transmission medium via the network interface device 620 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 302.11 family of standards known as Wi-Fi^{®}, IEEE 302.16 family of standards known as WiMax^{®}), IEEE 302.15.4 family of standards, a Long Term Evolution (LTE) family of standards, a Universal Mobile Telecommunications System (UMTS) family of standards, peer-to-peer (P2P) networks, among others. In an example, the network interface device 620 may include one or more physical jacks (e.g., Ethernet, coaxial, or phone jacks) or one or more antennas to connect to the communications network 626. In an example, the network interface device 620 may include a plurality of antennas to wirelessly communicate using at least one of single-input multiple-output (SIMO), MIMO, or multiple-input single-output (MISO) techniques. In some examples, the network interface device 620 may wirelessly communicate using Multiple User MIMO techniques. The term "transmission medium" shall be taken to include any intangible medium that is capable of storing, encoding or carrying instructions for execution by the communication device 600, and includes digital or analog communications signals or other intangible medium to facilitate communication of such software.

Although an embodiment has been described with reference to specific example embodiments, it will be evident that various modifications and changes may be made to these embodiments. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined by the appended claims.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments, as long as they fall under the scope of the appended claims. Combinations of the above embodiments, and other embodiments not specifically described herein, will be apparent to those of skill in the art upon reviewing the above description.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, UE, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

## Claims

1. A method comprising:
by a user equipment, UE (100):
configuring (210) a first media access control, MAC, entity of a plurality of MAC entities of the UE to support a first communication type, the first communication type comprising enhanced mobile broadband;
configuring (220) a second MAC entity of the plurality of MAC entities of the UE to support a second communication type, the second communication type comprising massive machine type communication or ultra-reliable low latency communications, wherein a number of configured MAC entities of the plurality of MAC entities is based on a maximum number of MAC entities supported for a UE category associated with a type of the UE;
configuring additional MAC entities to support respective communication types to the maximum supported count of MAC entities;
decoding (230) first MAC layer signaling via the first MAC entity; and
decoding (240), contemporaneously with decoding the first MAC layer signaling via the first MAC entity, second MAC layer signaling via the second MAC entity.

2. The method of claim 1, wherein to configure the first MAC entity to support the first communication type, the method further comprises:
selecting a MAC configuration from a plurality of supported MAC configurations.

3. The method of any of claims 1-2, wherein to configure the first MAC entity to support the first communication type, the method further comprises:
selecting a physical layer, PHY, configuration from a plurality of supported PHY configurations.

4. The method of any of claims 1-2, wherein to configure the first MAC entity to support the first communication type, the method further comprises:
selecting a MAC-physical layer, PHY, configuration from a plurality of supported MAC-PHY configurations.

5. The method of any of claims 1-2, wherein processing circuitry is to determine the maximum supported count of MAC entities based on a capability of the apparatus.

6. The method of any of claims 1-2, further comprising:
determining the maximum supported count of MAC entities based on a network configuration.

7. The method of any of claims 1-2, further comprising:
providing the maximum supported count of MAC entities to a device of a network using UE capability signaling during connection to the network.

8. The method of claim 7, wherein the device of the network comprises an evolved Node B, eNodeB, or gNodeB.

9. The method of any of claims 1-2, further comprising:
providing the maximum supported count of MAC entities to an evolved Node B, eNodeB, or gNB in response to a request from the eNodeB or gNB.

10. The method of claim 1, wherein processing circuitry of the UE comprises a baseband processor.

11. The method of claim 1, further comprising:
by transceiver circuitry of the UE:
receiving first MAC layer signaling via the first MAC entity; and
receiving, contemporaneously with receiving the first MAC layer signaling via the first MAC entity, second MAC layer signaling via the second MAC entity.

12. The method of claim 11, wherein the UE further comprises an antenna coupled to the transceiver circuitry.

13. A computer program comprising instructions, which when executed by at least one processor of a user equipment, UE (100), cause the UE (100) to perform a method according to any of claims 1-12.

14. An apparatus, comprising:
a processor configured to cause a wireless device (100) to implement a method according to any of claims 1-12.

15. The apparatus of claim 14, further comprising:
a radio operably coupled to the processor.

## Patentansprüche

1. Verfahren, umfassend:
durch eine Benutzervorrichtung, UE (100):
Konfigurieren (210) einer ersten Medienzugriffssteuerungs-, MAC-, Entität einer Vielzahl von MAC-Entitäten der UE, um einen ersten Kommunikationstyp zu unterstützen, wobei der erste Kommunikationstyp erweitertes mobiles Breitband umfasst;
Konfigurieren (220) einer zweiten MAC-Entität der Vielzahl von MAC-Entitäten der UE, um einen zweiten Kommunikationstyp zu unterstützen, wobei der zweite Kommunikationstyp Massive Machine Type-Kommunikation oder ultra-reliable low latency-Kommunikationen umfasst, wobei eine Anzahl von konfigurierten MAC-Entitäten der Vielzahl von MAC-Entitäten auf einer maximalen Anzahl von MAC-Entitäten basiert, die für eine UE-Kategorie unterstützt werden, die einem Typ der UE zugeordnet ist;
Konfigurieren zusätzlicher MAC-Entitäten, um jeweilige Kommunikationstypen zu der maximal unterstützten Anzahl von MAC-Entitäten zu unterstützen;
Decodieren (230) einer ersten MAC-Schicht-Signalisierung über die erste MAC-Entität; und
Decodieren (240), gleichzeitig mit dem Decodieren der ersten MAC-Schicht-Signalisierung über die erste MAC-Entität, einer zweiten MAC-Schicht-Signalisierung über die zweite MAC-Entität.

2. Verfahren nach Anspruch 1, wobei zum Konfigurieren der ersten MAC-Entität, um den ersten Kommunikationstyp zu unterstützen, das Verfahren ferner umfasst:
Auswählen einer MAC-Konfiguration aus einer Vielzahl von unterstützten MAC-Konfigurationen.

3. Verfahren nach einem der Ansprüche 1-2, wobei zum Konfigurieren der ersten MAC-Entität, um den ersten Kommunikationstyp zu unterstützen, das Verfahren ferner umfasst:
Auswählen einer Bitübertragungsschicht-, PHY-, Konfiguration aus einer Vielzahl von unterstützten PHY-Konfigurationen.

4. Verfahren nach einem der Ansprüche 1-2, wobei zum Konfigurieren der ersten MAC-Entität, um den ersten Kommunikationstyp zu unterstützen, das Verfahren ferner umfasst:
Auswählen einer MAC-Bitübertragungsschicht-, PHY-, Konfiguration aus einer Vielzahl von unterstützten MAC-PHY-Konfigurationen.

5. Verfahren nach einem der Ansprüche 1-2, wobei die Verarbeitungsschaltung die maximal unterstützte Anzahl von MAC-Entitäten basierend auf einer Fähigkeit der Vorrichtung bestimmen soll.

6. Verfahren nach einem der Ansprüche 1-2, ferner umfassend:
Bestimmen der maximal unterstützten Anzahl von MAC-Entitäten basierend auf einer Netzwerkkonfiguration.

7. Verfahren nach einem der Ansprüche 1-2, ferner umfassend:
Bereitstellen der maximal unterstützten Anzahl von MAC-Entitäten für eine Vorrichtung eines Netzwerks unter Verwendung einer UE-Fähigkeitssignalisierung während der Verbindung mit dem Netzwerk.

8. Verfahren nach Anspruch 7, wobei die Vorrichtung des Netzwerks einen evolved Node B, eNodeB oder gNodeB umfasst.

9. Verfahren nach einem der Ansprüche 1-2, ferner umfassend:
Bereitstellen der maximal unterstützten Anzahl von MAC-Entitäten für einen evolved Node B, eNodeB oder gNB als Reaktion auf eine Anforderung von dem eNodeB oder gNB.

10. Verfahren nach Anspruch 1, wobei die Verarbeitungsschaltung des UE einen Basisbandprozessor umfasst.

11. Verfahren nach Anspruch 1, ferner umfassend:
durch die Transceiver-Schaltung des UE:
Empfangen einer ersten MAC-Schicht-Signalisierung über die erste MAC-Entität; und
Empfangen, gleichzeitig mit dem Empfangen der ersten MAC-Schicht-Signalisierung über die erste MAC-Entität, einer zweiten MAC-Schicht-Signalisierung über die zweite MAC-Entität.

12. Verfahren nach Anspruch 11, wobei das UE ferner eine Antenne umfasst, die mit der Transceiver-Schaltung gekoppelt ist.

13. Computerprogramm, umfassend Anweisungen, die, wenn sie von mindestens einem Prozessor einer Benutzervorrichtung, UE (100), ausgeführt werden, die UE (100) veranlassen, ein Verfahren nach einem der Ansprüche 1-12 durchzuführen.

14. Vorrichtung, umfassend:
einen Prozessor, der konfiguriert ist, um eine drahtlose Vorrichtung (100) zu veranlassen, ein Verfahren nach einem der Ansprüche 1-12 zu implementieren.

15. Vorrichtung nach Anspruch 14, ferner umfassend:
eine Funkvorrichtung, die betriebsfähig mit dem Prozessor gekoppelt ist.

## Revendications

1. Un procédé comprenant :
par un équipement utilisateur, UE (100) :
la configuration (210) d'une première entité de contrôle d'accès au support, MAC, d'une pluralité d'entités MAC de l'UE pour supporter un premier type de communication, le premier type de communication comprenant une bande large mobile renforcée ;
la configuration (220) d'une seconde entité MAC de la pluralité d'entités MAC de l'UE pour supporter un second type de communication, le second type de communication comprenant une communication massive de type machine ou des communications à faible latence ultrafiables, un nombre d'entités MAC configurées de la pluralité d'entités MAC étant basé sur un nombre maximal d'entités MAC supportées pour une catégorie d'UE associée à un type de l'UE ;
la configuration d'entités MAC supplémentaires pour supporter des types de communications respectives jusqu'au compte maximal supporté d'entités MAC ;
le décodage (230) d'une première signalisation de couche MAC via la première entité MAC ; et
le décodage (240), concomitamment avec le décodage de la première signalisation de couche MAC via la première entité MAC, d'une seconde signalisation de couche MAC via la seconde entité MAC.

2. Le procédé de la revendication 1, dans lequel, pour configurer la première entité MAC pour supporter le premier type de communication, le procédé comprend en outre :
la sélection d'une configuration MAC parmi une pluralité de configurations MAC supportées.

3. Le procédé de l'une des revendications 1 à 2, dans lequel, pour configurer la première entité MAC pour supporter le premier type de communication, le procédé comprend en outre :
la sélection d'une configuration de couche physique, PHY, parmi une pluralité de configurations PHY supportées.

4. Le procédé de l'une des revendications 1 à 2, dans lequel, pour configurer la première entité MAC pour supporter le premier type de communication, le procédé comprend en outre :
la sélection d'une configuration de couche physique, PHY, MAC parmi une pluralité de configurations MAC-PHY supportées.

5. Le procédé de l'une des revendications 1 à 2, dans lequel une circuiterie de traitement sert à déterminer le compte maximal supporté d'entités MAC sur la base d'une capacité de l'appareil.

6. Le procédé de l'une des revendications 1 à 2, comprenant en outre :
la détermination du compte maximal supporté d'entités MAC sur la base d'une configuration de réseau.

7. Le procédé de l'une des revendications 1 à 2, comprenant en outre :
la délivrance du compte maximal supporté d'entités MAC à un dispositif d'un réseau en utilisant une signalisation de capacité d'UE pendant une connexion au réseau.

8. Le procédé de la revendication 7, dans lequel le dispositif du réseau comprend un nœud B amélioré, eNodeB, ou un gNodeB.

9. Le procédé de l'une des revendications 1 à 2, comprenant en outre :
la délivrance du compte maximal supporté d'entités MAC à un NodeB amélioré, eNodeB, ou à un gNB, en réponse à une requête en provenance de l'eNodeB ou du gNB.

10. Le procédé de la revendication 1, dans lequel une circuiterie de traitement de l'UE comprend un processeur en bande de base.

11. Le procédé de la revendication 1, comprenant en outre :
par une circuiterie d'émission-réception de l'UE :
la réception d'une première signalisation de couche MAC via la première entité MAC ; et
la réception, concomitamment avec la réception de la première signalisation de couche MAC via la première entité MAC, d'une seconde signalisation de couche MAC via la seconde entité MAC.

12. Le procédé de la revendication 11, dans lequel l'UE comprend en outre une antenne couplée à la circuiterie émettrice-réceptrice.

13. Un programme de calculateur comprenant des instructions qui, lorsqu'elles sont exécutées par au moins un processeur d'un équipement utilisateur, UE (100), font en sorte que l'UE (100) mette en œuvre un procédé selon l'une des revendications 1 à 12.

14. Un appareil comprenant :
un processeur configuré pour faire en sorte qu'un dispositif sans fil (100) implémente un procédé selon l'une des revendications 1 à 12.

15. L'appareil de la revendication 14, comprenant en outre :
une radio couplée de manière opérante au processeur.
